Europäisches Patentamt

European Patent Office

Office européen des brevets

(19)

(11) Numéro de publication : **0 021 975**
**B1**

(12) # FASCICULE DE BREVET EUROPÉEN

(45) Date de publication du fascicule du brevet :
**07.12.83**

(21) Numéro de dépôt : **80400876.1**

(22) Date de dépôt : **17.06.80**

(51) Int. Cl.³ : **F 16 F 15/12**, F 16 F 15/30

(54) **Amortisseur de vibrations de torsion d'un arbre.**

(30) Priorité : **20.06.79 FR 7915765**

(43) Date de publication de la demande :
**07.01.81 Bulletin 81/01**

(45) Mention de la délivrance du brevet :
**07.12.83 Bulletin 83/49**

(84) Etats contractants désignés :
**BE CH DE GB IT LI NL SE**

(56) Documents cités :
DE-A- 2 250 890
DE-A- 2 744 051
DE-B- 1 273 274
FR-A- 1 152 636
FR-A- 1 464 962
FR-A- 1 593 236
FR-A- 2 135 664
FR-A- 2 302 456
FR-A- 2 321 630
FR-A- 2 402 122
US-A- 2 948 129

(73) Titulaire : **DAMPERS S.A.**
**33-35 Rue Roger Salengro**
**F-69200 Venissieux (FR)**

(72) Inventeur : **Legallet, Georges**
**32 Rue Jouvenet**
**F-75016 Paris (FR)**

(74) Mandataire : **CABINET BONNET-THIRION**
**95 Boulevard Beaumarchais**
**F-75003 Paris (FR)**

Amortisseur de vibrations de torsion d'un arbre

La présente invention concerne un amortisseur pour réduire les vibrations de torsion d'un arbre et/ou pour éviter de transmettre de telles vibrations à un organe entraîné. L'amortisseur comporte un moyeu solidaire de l'arbre, et un anneau périphérique d'inertie monté concentriquement autour du moyeu avec un jeu radial. Le moyeu et l'anneau périphérique d'inertie sont associés en rotation, par un élément élastique d'amortissement inséré entre le moyeu et l'anneau, dans un logement dont l'épaisseur correspond au jeu radial précité.

On connaît divers amortisseurs du genre en question, notamment des amortisseurs dans lesquels le logement ménagé entre le moyeu et l'anneau périphérique présente, suivant un plan transversal à l'arbre du moyeu, un contour sensiblement circulaire.

De tels amortisseurs sont utilisés notamment pour réduire les vibrations de torsion des vilebrequins de certains moteurs à combustion interne. L'élément élastique d'amortissement, inséré entre le moyeu et l'anneau, est en général comprimé au montage, ou fixé par collage aux deux organes entre lesquels il est monté. Les déplacements angulaires relatifs du moyeu et de l'anneau d'inertie, correspondant notamment aux vibrations de torsion du vilebrequin, sollicitent ainsi du cisaillement l'élément élastique d'amortissement, généralement réalisé en caoutchouc. Par contre, l'élément élastique d'amortissement de ces amortisseurs connus n'est pas sollicité en compression. Ceci ne permet pas de profiter des caractéristiques très favorables d'amortissement du matériau constituant l'élément précité, dans ce genre de déformation, notamment pour accepter un couple de valeur élevée, et limiter à une valeur relativement faible le débattement angulaire relatif du moyeu et de l'anneau périphérique d'inertie.

Le but de l'invention est d'éviter l'inconvénient que l'on vient d'exposer, en permettant de réaliser un amortisseur de vibrations du genre en question, qui permette de solliciter en compression l'élément élastique d'amortissement, pour limiter à une valeur relativement faible le débattement angulaire relatif du moyeu et de l'anneau périphérique d'inertie, en acceptant un couple de valeur élevée entre ces deux organes.

Pour éviter l'inconvénient précité, l'invention propose un amortisseur pour réduire les vibrations de torsion d'un arbre et/ou pour éviter de les transmettre, du genre comportant un moyeu solidaire de l'arbre et un anneau périphérique d'inertie monté concentriquement autour du moyeu, le moyeu et l'anneau étant associés en rotation par un élément élastique d'amortissement inséré dans un logement ménagé entre une face radialement externe du moyeu et une face radialement interne de l'anneau, ces faces du moyeu et de l'anneau s'étendant parallèlement à l'axe du moyeu, caractérisé en ce que ces faces forment perpendiculairement à l'axe deux contours parallèles déterminant entre eux pour l'élément élastique annulaire un logement d'épaisseur sensiblement constante en forme de polygone régulier à sommets arrondis.

Cette disposition du contour du logement élastique d'amortissement permet, pour de très faibles déplacements angulaires de l'anneau d'inertie par rapport au moyeu, de faire travailler l'élément élastique essentiellement en cisaillement, tandis que pour des déplacements angulaires plus importants les efforts de compression deviennent prépondérants ; les caractéristiques d'amortissement et de réponse en fréquence sont améliorées.

On connaissait par le brevet des Etats-Unis 2 948 129 des amortisseurs dont l'élément élastique d'amortissement travaille au cisaillement pour de très faibles débattements angulaires d'un anneau d'inertie, et en compression pour des débattements plus accentués. Dans ce but l'élément élastique est limité par des faces d'anneau et de moyeu qui épousent la forme de cylindres à section elliptiques, dont l'axe principal coïncide avec l'axe de rotation de l'amortisseur. Les grands et petits axes des sections elliptiques des faces de moyeu et d'anneau sont respectivement confondus au repos. Il est remarquable que la présente invention obtienne un résultat sensiblement équivalent à celui du brevet des Etats-Unis précité en utilisant des formes de faces et d'élément élastique d'usinage nettement plus aisé.

Dans un mode de réalisation intéressant, le logement de l'élément élastique d'amortissement présente un contour carré à sommets arrondis. L'élément élastique inséré entre le moyeu et l'anneau d'inertie est fixé par collage à l'un ou aux deux organes précités.

Dans la description qui suit, on indique comment ce mode de réalisation permet une fabrication industrielle commode et économique de l'amortisseur conforme à l'invention.

D'une manière avantageuse, l'anneau périphérique d'inertie comporte des moyens pour fixer de manière amovible sur l'anneau un organe, solidaire en rotation de l'anneau précité. Cet organe est, par exemple un volant d'inertie concentrique à l'anneau d'inertie. Cet organe peut aussi être un appareil tournant, entraîné par l'arbre du moyeu de l'amortisseur.

Cette fixation amovible prévue sur l'anneau périphérique d'inertie permet une meilleure souplesse d'utilisation de l'amortisseur conforme à l'invention, par exemple en y adaptant à la demande des volants d'inertie de diverses tailles, correspondant à des cas d'utilisation déterminés, ou en y adaptant l'organe d'entraînement de divers appareils tournants ainsi commandés par l'arbre sur lequel est monté le moyeu de l'amortisseur.

D'autres particularités et avantages de l'invention ressortiront encore de la description donnée ci-après de quelques modes de réalisation, présentés à titre d'exemples non limitatifs, en référence aux dessins annexés dans lesquels :

la figure 1  est une vue en plan d'un amortisseur conforme à l'invention ;

la figure 2  est une coupe axiale de l'amortisseur de la figure 1, suivant II-II ;

la figure 3,  analogue à la figure 2, représente une variante de l'amortisseur, prévue pour la fixation amovible d'un organe sur l'anneau périphérique ;

la figure 4,  analogue à la figure 1, est une vue en plan d'une réalisation industrielle de l'amortisseur ;

la figure 5,  analogue à la figure 2, est une coupe axiale de l'amortisseur de la figure 4, suivant V-V.

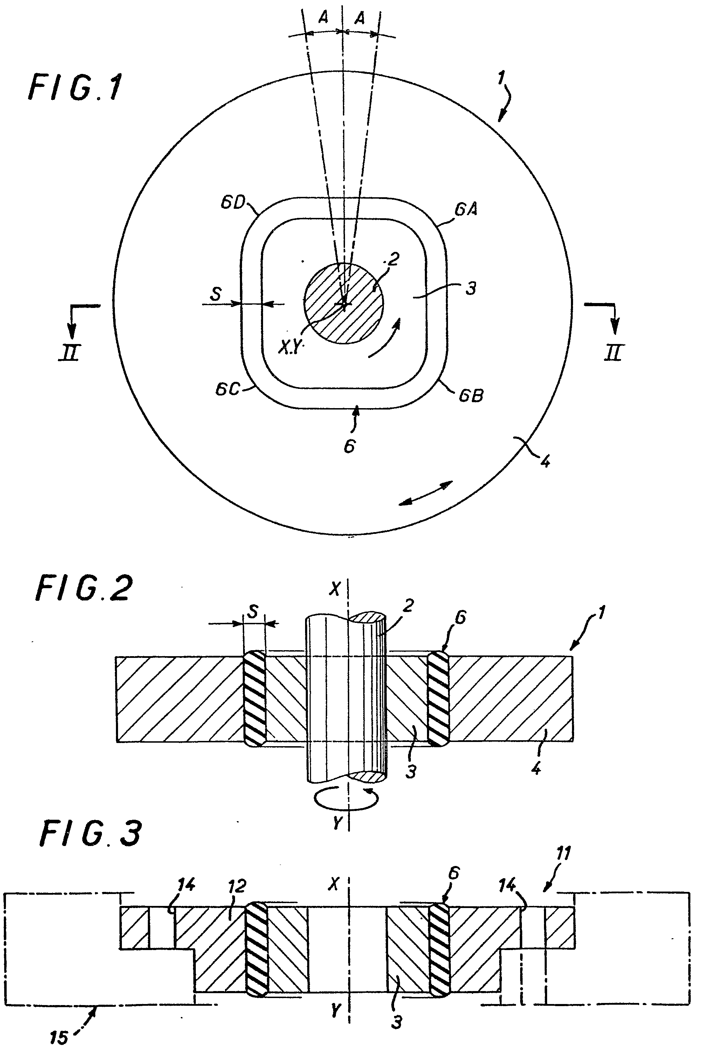

Dans le mode de réalisation des figures 1 et 2, l'amortisseur 1 est prévu pour réduire les vibrations de torsion d'un arbre 2 d'axe X-Y, et comporte un moyeu 3 solidaire en rotation de l'arbre 2, auquel il est fixé par exemple par clavetage, par un emmanchement à cannelures, ou par tout autre moyen connu. Un anneau périphérique d'inertie 4 est monté concentriquement autour du moyeu 3, avec un jeu radial 5, le moyeu 3 et l'anneau périphérique d'inertie 4 sont associés en rotation par un élément élastique d'amortissement 6, de forme annulaire, inséré entre le moyeu 3 et l'anneau périphérique 4, dans un logement dont l'épaisseur correspond au jeu radial 5. L'élément élastique d'amortissement 6 est réalisé par exemple en caoutchouc synthétique moulé, à l'épreuve des hydrocarbures et du vieillissement.

Conformément à l'invention, le logement de l'élément élastique d'amortissement 6 présente, suivant un plan transversal à l'arbre 2 du moyeu 3 d'axe X-Y, un contour polygonal à sommets arrondis.

Par exemple (figures 1 et 2), le logement de l'élément élastique d'amortissement 6 présente un contour carré, à sommets arrondis 6A, 6B, 6C, 6D. Lorsque l'amortisseur 1 fonctionne, pour absorber les vibrations de torsion de l'arbre 2, un certain débattement angulaire alternatif se produit, entre le moyeu 3, solidaire de l'arbre 2, et l'anneau périphérique 4 soumis à sa propre inertie, et associé élastiquement au moyeu 3 par l'élément élastique d'amortissement 6. L'amplitude « A » du débattement angulaire précité, de part et d'autre d'une position moyenne de repos de l'amortisseur 1 (figure 1) dépend notamment de la valeur du couple qui s'exerce entre le moyeu 3 et l'anneau périphérique 4, ainsi que des caractéristiques d'élasticité du caoutchouc utilisé pour confectionner l'élément élastique d'amortissement 6, et du jeu radial 5 prévu par construction entre le moyeu 3 et l'anneau périphérique 4.

Dans la zone de chaque sommet arrondi 6A, 6B, 6C, 6D, le caoutchouc de l'élément 6 est soumis essentiellement à un effet de cisaillement. Il en va de même dans les autres parties de l'élément élastique 6, pour de faibles valeurs de l'amplitude « A » de débattement angulaire entre le moyeu 3 et l'anneau périphérique 4. Par contre, si l'amplitude « A » atteint une valeur relativement importante, de l'ordre de 5 à 8° par exemple, les parties rectilignes de l'élément élastique d'amortissement 6, entre les sommets arrondis 6A, 6B, 6C, 6D, se trouvent soumises sensiblement sur la moitié de leur longueur à un effet important de compression, correspondant à une réduction du jeu radial 5 existant au repos entre le moyeu 3 et l'anneau périphérique 4 aux endroits précités.

En effet, pour un sens donné de l'amplitude « A », les parties en regard du moyeu 3 et de l'anneau périphérique 4 tendent à se rapprocher sur une partie de la longueur de chaque côté rectiligne de l'élément élastique 6, et à s'écarter au contraire l'une de l'autre sur l'autre partie de chaque côté de l'élément 6. Dans la partie ainsi comprimée de chaque côté rectiligne de l'élément 6, on peut profiter des caractéristiques mécaniques très favorables du caoutchouc, dans ce genre de déformation, par opposition aux caractéristiques du même caoutchouc en extension ou au cisaillement. Grâce à l'effet important de compression ainsi réalisé sur l'élément élastique d'amortissement 6, on peut obtenir un rendement très élevé pour l'amortisseur 1, en limitant à une valeur relativement faible l'amplitude « A » pour une valeur importante du couple exercé entre le moyeu 3 et l'anneau périphérique d'inertie 4.

La souplesse présentée. par l'élément élastique 6 est, en effet, sensiblement plus faible en compression, qu'au cisaillement ou en extension. Ceci permet d'obtenir avec l'amortisseur conforme à l'invention une rigidité en torsion plus importante qu'avec les amortisseurs connus, où l'élément élastique n'est pas sollicité en compression, mais seulement au cisaillement. La variation très accentuée du couple en jeu, en fonction de l'amplitude « A » du débattement angulaire entre le moyeu 3 et l'anneau périphérique 4, permet ainsi de limiter commodément le débattement maximum de l'amortisseur 1, en fonction du jeu radial 5 prévu par construction entre le moyeu 3 et l'anneau périphérique 4, pour obtenir un effet de butée élastique en torsion, d'une manière très efficace.

Ce taux d'augmentation rapide du couple en jeu, en fonction de l'amplitude « A » du débattement angulaire entre le moyeu 3 et l'anneau périphérique 4, permet d'adapter de manière efficace l'amortisseur conforme à l'invention à des vibrations de torsion de fréquence relativement plus élevée, pour des amplitudes assez importantes, et d'obtenir notamment un meilleur accord de l'amortisseur, pour les vibrations d'un mode à deux nœuds par exemple.

Pour des effets importants de torsion, l'effet positif de butée, ainsi assuré par les parties en compression de l'élément élastique 6, permet d'en éviter la destruction, comme dans le cas des amortisseurs de torsion connus dont l'élément élastique travaille seulement au cisaillement ou en extension, sans effet positif de butée. Comme on l'expose plus loin, à propos d'une variante de l'amortisseur conforme à l'invention, l'effet précité de butée élastique de torsion est particulièrement avantageux dans le cas d'appareils entraînés en rotation par l'arbre 2, par l'intermédiaire de l'amortisseur dont l'anneau périphérique est pourvu à cet effet de moyens de fixation appropriés.

Bien entendu, l'invention n'est pas limitée au mode de réalisation que l'on vient de décrire à titre d'exemple, et on peut y apporter de nombreuses variantes sans sortir du domaine de l'invention.

Ainsi, on peut réaliser un amortisseur analogue à celui des figures 1 et 2, mais dont le logement de l'élément élastique d'amortissement, analogue à l'élément 6, présente un contour triangulaire (non représenté), à sommets arrondis. Pour un même encombrement de l'amortisseur, ceci permet notamment de réduire l'importance relative des parties arrondies de l'élément élastique d'amortissement, correspondant aux sommets du polygone, où le caoutchouc travaille principalement au cisaillement, d'une manière moins favorable.

Dans un autre mode de réalisation de l'amortisseur 11 (figure 3) l'anneau périphérique d'inertie 12 comporte des moyens tels que des trous 14, pour fixer sur l'anneau 12 un organe solidaire en rotation de l'anneau. Ainsi qu'on l'a schématisé en traits interrompus sur la figure 3, l'organe solidaire en rotation de l'anneau 12 est par exemple un volant d'inertie 15, concentrique à l'anneau 12, et dont on peut choisir, à la demande, la taille et le moment d'inertie, pour répondre exactement à des conditions d'utilisation déterminées.

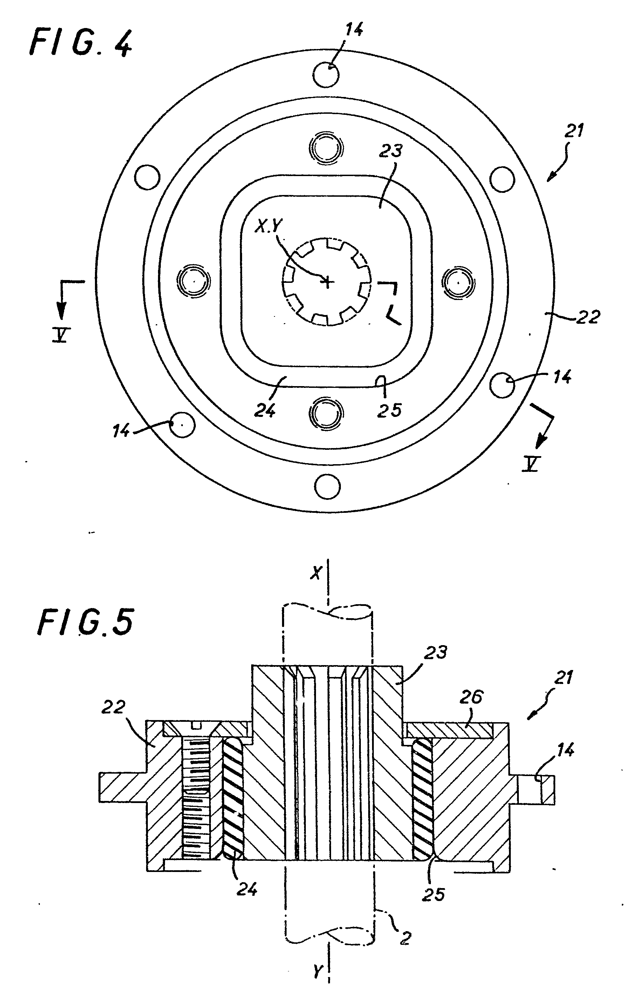

Sur les figures 4 et 5, on a représenté un mode de réalisation industrielle de l'amortisseur 21 conforme à l'invention, étudié pour une fabrication en série, notamment en vue de faciliter le montage dans l'anneau périphérique 22 du moyeu 23 et de l'élément élastique d'amortissement 24, analogue à l'élément 6 des figures 1 à 3.

Pour l'assemblage de l'amortisseur 21, on positionne sous une presse le moyeu 23 et l'anneau extérieur 22 de façon à maintenir un évidement de largeur constante.

L'élément élastique 24 non comprimé est à son tour placé sur un guide (non représenté) après avoir été lubrifié, par exemple à l'huile.

On enfonce alors à la presse l'élément élastique 24 dans l'espace libre entre moyeu 23 et anneau 22 dont un bord présente avantageusement un profil évasé, arrondi ou en chanfrein du côté prévu pour l'introduction de l'élément 24.

D'une manière avantageuse, l'amortisseur 21 comporte un couvercle vissé 26, mis en place de chaque côté de l'anneau périphérique 22, après le montage du moyeu 23 garni de l'élément 24, pour empêcher tout déplacement du moyeu 23 ou de l'élément élastique 24 dans le sens de l'axe X-Y de l'amortisseur. L'épaisseur radiale prévue pour l'élément élastique 24 à l'état libre est sensiblement plus forte que le jeu radial 5, ménagé par construction entre le moyeu 23 et l'anneau périphérique 22, de sorte que l'élément 24 se trouve assez fortement écrasé dans le sens radial par la bordure évasée 25, au moment où il est introduit dans l'évidement central de l'anneau 22. L'écrasement radial précité assure une bonne adhérence de l'élément 24 sur la paroi de l'évidement interne de l'anneau périphérique 22, malgré la présence du lubrifiant utilisé pour le montage, qui se trouve progressivement éliminé par effet centrifuge ou séchage, étant sans effet sur le caoutchouc synthétique de l'élément élastique 24.

Pour l'introduction de l'élément élastique 24 dans l'évidement central du moyeu 22, on peut aussi enduire la face externe de l'élément 23 ou les parois de l'évidement précité d'une composition appropriée, assurant à froid la lubrification souhaitée et pouvant se polymériser à chaud, par exemple à 80 °C, pour coller solidement l'élément 24 sur la paroi de l'évidement de l'anneau 22, sans affecter les propriétés mécaniques ultérieures du caoutchouc de l'élément 24, prévu pour subir sans inconvénient une telle température.

Il est également possible de réaliser l'assemblage sans précompression de l'élément élastique par simple collage de ce dernier aux parties métalliques.

## Revendications

1. Amortisseur pour réduire les vibrations de torsion d'un arbre et/ou pour éviter de les transmettre, du genre comportant un moyeu solidaire de l'arbre et un anneau périphérique d'inertie monté concentriquement autour du moyeu, le moyeu et l'anneau étant associés en rotation par un élément élastique d'amortissement inséré dans un logement ménagé entre une face radialement externe du moyeu et une face radialement interne de l'anneau, ces faces du moyeu (3, 23) et de l'anneau (4, 22) s'étendant parallèlement à l'axe (XY) du moyeu, caractérisé en ce que ces faces (3, 23) et (4, 22), forment perpendiculairement à l'axe (XY) deux contours parallèles déterminant entre eux pour l'élément élastique (6, 24) annulaire un logement d'épaisseur sensiblement constante en forme de polygone régulier à sommets arrondis (6A, 6B, 6C, 6D).

2. Amortisseur selon la revendication 1, caractérisé en ce que le logement présente un contour carré à sommets arrondis (6A, 6B, 6C, 6D).

3. Amortisseur selon l'une des revendications 1 et 2, caractérisé en ce que l'élément élastique d'amortissement (6, 24) est fixé par collage à l'un au moins des organes constitué par le moyeu (3, 23) et l'anneau d'inertie (4, 22).

4. Amortisseur selon l'une quelconque des revendications 1 à 3, caractérisé par des moyens (14) adaptés à fixer de manière amovible sur l'anneau d'inertie (4, 22) un organe solidaire en rotation dudit anneau.

5. Amortisseur selon la revendication 4, caractérisé en ce que l'organe solidarisé en rotation avec l'anneau d'inertie est un volant d'inertie concentrique audit anneau.

6. Amortisseur selon la revendication 4, caractérisé en ce que l'organe solidarisé en rotation avec l'anneau d'inertie est un appareil tournant entraîné par l'arbre du moyeu de l'amortisseur.

7. Amortisseur selon l'une quelconque des revendications 1 à 6, caractérisé par au moins un couvercle (26) ménagé sur une face latérale de l'amortisseur et s'étendant en regard des parties au moins de l'anneau et du moyeu, de part et d'autre du logement précité.

## Claims

1. A damper for reducing the torsional vibration of a shaft and/or for preventing transmission thereof, of the type comprising a boss which is fixed with respect to the shaft and a peripheral inertia ring mounted concentrically around the boss, the boss and the ring being rotationally associated by a resilient damping element inserted in a housing formed between a radially outward surface of the boss and a radially inward surface of the ring, said surfaces of the boss (3, 23) and the ring (4, 22) extending parallel to the axis (XY) of the boss, characterised in that said faces (3, 23) and (4, 22) form, perpendicularly to the axis (XY), two parallel contours defining between them, for the annular resilient element (6, 24), a housing of substantially constant thickness in the form of a regular polygon having rounded corners (6A, 6B, 6C and 6D).

2. A damper according to claim 1, characterised in that the housing has a square contour with rounded corners (6A, 6B, 6C and 6D).

3. A damper according to one of claims 1 and 2, characterised in that the resilient damping element (6, 24) is secured by glueing to one at least of the members formed by the boss (3, 23) and the inertia ring (4, 22).

4. A damper according to any one of claims 1 to 3, characterised by means (14) adapted removably to fix to the inertia ring (4, 22) a member which is fixed with respect to the ring for rotation therewith.

5. A damper according to claim 4, characterised in that the member which is fixed with respect to the inertia ring for rotation therewith is a flywheel which is concentric with respect to said ring.

6. A damper according to claim 4, characterised in that the member which is fixed with respect to the inertia ring for rotation therewith is a rotary apparatus driven by the shaft of the boss of the damper.

7. A damper according to any one of claims 1 to 6, characterised by at least one cover (26) provided on a side face of the damper and extending over parts at least of the ring and the boss, on respective sides of said housing.

## Ansprüche

1. Dämpfer zur Verminderung der Torsionsschwingungen einer Welle und/oder zur Vermeidung von deren Übertragung, mit einer fest mit der Welle verbundenen Nabe und einem konzentrischum die Nabe gelagerten Umfangsträgheitsring, wobei Nabe und Ring in Drehung durch ein elastisches Dämpferelement einander zugeordnet sind, welches in ein Lager eingeführt ist, das zwischen einer radial äußeren Fläche der Nabe und einer radial inneren Fläche des Rings ausgespart ist, wobei diese Flächen der Nabe (3, 23) sowie des Rings (4, 22) sich parallel zur Achse (XY) der Nabe erstrecken, dadurch gekennzeichnet, daß diese Flächen (3, 23) und (4, 22) senkrecht zur Achse (XY) zwei parallele Konturen bilden, die zwischen sich für das elastische ringförmige Element (6, 24) ein Lager im wesentlichen konstanter Dicke in Form eines regelmäßigen Polygons mit abgerundeten Spitzen (6A, 6B, 6C, 6D) bestimmen.

2. Dämpfer nach Anspruch 1, dadurch gekennzeichnet, daß das Lager eine quadratische Kontur mit abgerundeten Spitzen (6A, 6B, 6C, 6D) aufweist.

3. Dämpfer nach einem der Ansprüche 1 und 2, dadurch gekennzeichnet, daß das elastische Dämpferelement (6, 24) durch Kleben an wenigstens eines der Organe befestigt ist, das durch die Nabe (3, 23) und den Trägheitsring (4, 22) gebildet ist.

4. Dämpfer nach einem der Ansprüche 1 bis 3, gekennzeichnet durch Einrichtungen (14), die so ausgebildet sind, daß sie lösbar am Trägheitsring (4, 22) ein drehfest mit diesem Ring verbundenes Organ befestigen.

5. Dämpfer nach Anspruch 4, dadurch gekennzeichnet, daß das drehfest mit dem Trägheitsring ausgebildete Organ eine zu diesem Ring konzentrische Trägheitsschwungmasse ist.

6. Dämpfer nach Anspruch 4, dadurch gekennzeichnet, daß das mit dem Trägheitsring drehfeste Organ ein sich drehender Apparat ist, der von der Welle der Nabe des Dämpfers angetrieben ist.

7. Dämpfer nach einem der Ansprüche 1 bis 6, gekennzeichnet durch wenigstens einen Deckel (26), der auf einer Seitenfläche des Dämpfers angeordnet ist und den Teilen wenigstens des Rings und der Nabe zu beiden Seiten des genannten Lagers gegenübersteht.

*FIG.1*

*FIG.2*

*FIG.3*

FIG. 4

FIG. 5